(19) Europäisches Patentamt
European Patent Office
Office européen des brevets

(11) **EP 2 650 103 A1**

(12) **EUROPÄISCHE PATENTANMELDUNG**

(43) Veröffentlichungstag:
**16.10.2013 Patentblatt 2013/42**

(51) Int Cl.:
***B29C 51/00*** (2006.01)   ***B29C 51/14*** (2006.01)
***B32B 27/08*** (2006.01)

(21) Anmeldenummer: **12163850.6**

(22) Anmeldetag: **12.04.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Senoplast Klepsch & Co. GmbH**
**5721 Piesendorf (AT)**

(72) Erfinder:
• **Kappacher, Johann**
 **5721 Piesendorf (AT)**

• **Grugger, Marco**
 **5700 Zell am See (AT)**
• **Resch, Julia Antonia**
 **5020 Salzburg (AT)**
• **Wenger, Peter**
 **5660 Taxenbach (AT)**

(74) Vertreter: **Schwarz & Partner**
**Patentanwälte**
**Wipplingerstraße 30**
**1010 Wien (AT)**

(54) **Halogenfreier Verbundkörper**

(57)    Im Wesentlichen halogenfreier Verbundkörper (4), insbesondere zur Verwendung im Twin-Sheet-Thermoformverfahren, aufweisend (a) eine mindestens einlagige Substratschicht (2) und (b) eine auf der Substratschicht (2) angeordnete rückseitige Schicht (3), wobei die Substratschicht (2) und die rückseitige Schicht (3) jeweils mindestens einen thermoplastischen Werkstoff umfassen, wobei die Substratschicht (2) und die rückseitige Schicht (3) jeweils zumindest einer Glasübergangstemperatur $T_{mg}$ aufweisen, dadurch gekennzeichnet, dass die höchste Glasübergangstemperatur ($T_{mg}$) der rückseitigen Schicht (3) um mindestens ($\delta T_{mg}$) 5°C niedriger ist gegenüber der niedrigsten Glasübergangstemperatur ($T_{mg}$) der Substratschicht (2, 2'), wobei der gesamte Verbundkörper (4) bei einer Gesamtstärke von 1 - 5 mm eine spektrale Transmission (Y) im Wellenlängenbereich von 380 - 780 nm von $\geq$ 70, bevorzugt $\geq$ 80%, gemessen nach DIN EN ISO 13468-2 (Ausgabenstand Juli 2006) und eine Bruchdehnung von mindestens 10 % gemessen nach ISO 527-2/1B/50 aufweist.

Fig. 1

## Beschreibung

Die Erfindung betrifft einen im Wesentlichen halogenfreien Verbundkörper, insbesondere zur Verwendung in Twin- Sheet- Thermoformverfahren, aufweisend eine Substratschicht und eine darauf angeordnete rückseitige Schicht, wobei die Substratschicht und die rückseitige Schicht jeweils mindestens einen thermoplastischen Werkstoff umfassen. Weiters betrifft die Erfindung die Verwendung solcher Verbundkörper im Thermoformverfahren. Die Erfindung betrifft außerdem Körper, wie z.B. Lichtkuppen, Lichtpaneele, Designkörper, architektonischen Körper und Behälter, umfassend die zuvor genannten Verbundkörper. Schließlich betrifft die Erfindung die Verwendung der zuvor genannten Verbundkörper.

Transparente, großflächige Bauteile werden in verschiedensten Applikationen sowohl innerhalb von Gebäuden aber auch im Außenbereich verwendet. Als Beispiele können Lichtkuppen, Lichtpaneele, Designkörper sowie Leichtbaustrukturen genannt werden. Die Bauteile können transparent oder transparent aber eingefärbt sein. Derartige Bauteile können auch als Bioreaktoren, in denen biotechnologische Verfahren durchgeführt werden, eingesetzt werden. Bei Bioreaktoren handelt es sich um meist transparente Behälter, in denen bestimmte Mikroorganismen, Zellen oder kleine Pflanzen unter möglichst optimalen Bedingungen kultiviert werden. Wichtige Faktoren, die in den meisten Bioreaktoren steuerbar oder kontrollierbar sind, sind die Zusammensetzung des Nährmediums (auch Nährlösung oder Substrat), die Sauerstoffzufuhr, Temperatur, pH- Wert, Sterilität und andere. Zweck der Kultivierung in einem Bioreaktor kann die Gewinnung von Zellen, Zellbestandteilen oder von Stoffwechselprodukten sein. Solche Stoffwechselprodukte können z. B. als Wirkstoff in der pharmazeutischen Chemie oder als Grundchemikalien in der chemischen Industrie dienen. Auch der Abbau von chemischen Verbindungen kann in Bioreaktoren stattfinden, wie z. B. bei der Abwasserreinigung in Kläranlagen.

In Bioreaktoren werden daher unterschiedlichste Organismen für verschiedene Zwecke kultiviert. Es stehen daher je nach Anwendungszweck unterschiedliche Bioreaktorvarianten in verschiedenen Ausführungen zur Verfügung. Photobioreaktoren sind eine Ausführungsform und werden zur Kultivierung von Photosynthese betreibenden Organismen (Algen, Pflanzen (zellen) ) eingesetzt; als Photoreaktor oder auch Photobioreaktor bezeichnet man einen Bioreaktor zur Kultivierung und Produktion von phototrophen ein- oder wenigzelligen Organismen wie Algen, Cyanobakterien, Moospflanzen oder pflanzliche Zellkulturen. Im Gegensatz zur Fermentation von heterotrophen Organismen, wie zum Beispiel Bakterien, Pilzen oder tierischen Organismen, die reduzierte Kohlenstoffverbindungen wie Zucker, Fette etc. als Energiequelle verwenden, wird im Photoreaktor die Fähigkeit phototropher Organismen zur Photosynthese als Energiequelle genutzt. In Photobioreaktoren können sie aus nährsalzhaltigen Abwässern und kohlenstoffdioxidhaltigen Abgasen Biomasse produzieren. Ein mit Algen betriebener Reaktor wird auch als Algenreaktor bezeichnet. Zur Anzucht von Algen werden sogenannte Algenreaktoren oder Algenbioreaktoren verwendet. Darunter versteht man einen Photobioreaktor zum Kultivieren von Algen, in den Kohlendioxid eingetragen wird. Die heranwachsenden Algen nutzen das ihnen zur Verfügung gestellte $CO_2$ und Sonnenlicht, um Photosynthese zu betreiben. Vorteile der Kultivierung von Mikroalgen im Vergleich zum Anbau von Nutzpflanzen an Land sind der hohe Ertrag pro Fläche, das Ausbleiben von Abfällen wie Wurzeln und der geringere Wasserverbrauch. Zudem stehen sie nicht in Konkurrenz mit Landpflanzen. Nachteilig sind hohe Investitionskosten betreffend den Bioreaktor und die Zucht sowie das Fehlen großtechnischer Verfahren.

Bioreaktoren bestehen nach Stand der Technik in der Regel aus Glas, damit das Licht mit der erforderlichen Wellenlänge und Intensität zu den Organismen gelangt; optimiert wird die Lichtausnutzung durch platten- oder röhrenförmige Bioreaktoren, durch welche eine Nährlösung mit den Algen oder anderen Mikroorganismen in Form eines geschlossenen Kreislaufes kontinuierlich gepumpt wird. Zur kostengünstigen Algenzucht hat man Anstrengungen unternommen, um einerseits die Investitionskosten zu senken, andererseits auch die laufenden Kosten zu minimieren.

Die EP 1 326 959 B1 beschreibt ein Verfahren zur Herstellung von Algenreaktoren mit großem Verhältnis von Oberfläche zu Volumen, um eine möglichst gute Durchdringung mit Licht zu gewährleisten. Die EP 1 326 959 B1 sieht dabei die Verwendung von flexiblen transparenten Folien - insbesondere Kunststofffolien aus Polypropylen, Polystyrol oder Polyethylen vor und verweist auf die Kostenvorteile dieser Materialien gegenüber Glas oder Plexiglas. Unberücksichtigt bleibt in dieser Veröffentlichung die Tatsache, dass die genannten Werkstoffe auf Grund ihrer mangelnden UV-Beständigkeit für den Einsatz der daraus hergestellten Bioreaktoren im Außenbereich nicht geeignet sind. Die genannten Materialien vergilben (wodurch sich eine Veränderung der transmittierten Wellenlängen des Lichtes ergibt) und verlieren schon nach kurzer Zeit an Transparenz, wodurch das Wachstum der Algen im Reaktor negativ beeinflusst wird.

Die EP 1 169 428 B1 beschreibt Photobioreaktoren mit Geometrien, welche gegenüber der geradflächig Umhüllenden eine Oberflächenvergrößerung aufweisen. Als Materialien zur Herstellung solcher Photobioreaktoren werden lichtdurchlässigen Werkstoffen wie Plexiglas oder Glas genannt. Weiters wird beschrieben, dass auch Fluoreszenzstoffe enthalten sein können, welche als Wellenlängenschieber fungieren und organischen Gläsern wie Acrylglaspolycarbonat oder -polystyrol zugesetzt werden können. Es ist in diesem Fall allerdings unklar, worum es sich bei Acrylglaspolycarbonat und Acrylglaspolystyrol handeln soll, da beide Begriffe in der Polymerchemie nicht geläufig sind.

Der EP 1 169 428 B1 und der EP 1 326 959 B1 ist gemein, dass sie als Lösung zur Herstellung von Photobioreaktoren die Verwendung von transparenten thermoplastischen Halbzeugen aufzeigen, allerdings keine Lösung anbieten, nach welchem Verfahren diese zu dauerhaft verwendungsfähigen Reaktoren verarbeitet werden können und welche Eigenschaften diese Halbzeuge für die Verarbeitung und den Einsatzzweck einbringen müssen.

Zur Herstellung von Hohlkörpern und paneelartigen Strukturen, von großflächigen hohlen Bauteilen unterschiedlichster Größe hat sich das Twin-Sheet-Thermoformverfahren (auch "2-Platten-Formen" genannt) etabliert. Es handelt sich dabei um eine Weiterentwicklung des Thermoformens und stellt ein wirtschaftliches und ressourcenschonendes Verfahren zur Herstellung von präzisen, steifen Hohlkörpern fast beliebiger Geometrie dar. Während beim Thermoformen ein Verbundkörper erhitzt und anschließend umgeformt wird, geschieht das im Twin-Sheet-Thermoformverfahren mit zwei Platten (Formhälften) entweder nacheinander (amerikanische Twin-Sheet Version) oder gleichzeitig (europäische Twin-Sheet Version oder simultanes Twin-Sheet Thermoformverfahren). Dabei entstehen zumeist Hohlkörper, die entweder als tankähnliche (mittels zweier Negativ-Werkzeuge) oder als panel-/gehäuseähnliche Produkte ausgebildet sind, bei denen eine Formhälfte negativ, die zweite Formhälfte positiv, also in Richtung der ersten Formhälfte geformt wird. Als Konkurrenzverfahren kann das Blasformen genannt werden, welches zur Herstellung kleinerer Bauteile, z. B. Flaschen aus PET (Polyethylentherephthalat) eingesetzt wird.

Lichtkuppen, Lichtpaneele, Designkörper, Leichtbaustrukturen sowie plattenförmige Photobioreaktoren zeigen paneelartige Bauteilgeometrie und können daher im Twin- Sheet- Thermoformverfahren unter Verwendung von transparenten Halbzeugen aus PVC, PC, HI- PMMA, GPPS und anderen erzeugt werden, wobei in der Verarbeitung alle diese Halbzeuge verbesserungswürdige Performance zeigen: Da im Twin- Sheet- Thermoformverfahren die Beheizung des jeweiligen Halbzeuges nur einseitig erfolgt, müssen die Platten auf der strahlerausgesetzten Seite stark erhitzt werden, um auch die den Heizstrahlern gegenüberliegende Seite der Halbzeuge auf eine Temperatur anzuheben, welche ein thermisches Verschweißen ermöglicht. Verarbeitungsbedingt tritt zwischen der Aufheizphase und der Verschweißphase noch eine Verformphase auf, in welcher das Material der jeweiligen Formhälfte in die endgültige Geometrie gezogen wird. In der Verform- und Verschweißphase kann der Formkörper dabei prozessbedingt nicht mehr weiter beheizt werden.

Daraus resultiert aber das Problem, dass innerhalb der beiden Verarbeitungsphasen das Material so rasch an der Oberfläche abkühlt, dass die Oberflächentemperatur der beiden Formhälften unter den Glasübergangsbereich absinkt und dadurch mit der jeweiligen Gegenform, die dieselbe Erscheinung zeigt, unzureichend verschweißt. Unmittelbar nach der Verformphase folgt das thermische Verschweißen der Formhälfte mit der gegenüberliegenden Formhälfte durch Verpressen der Schweißflächen und/oder Schweißpunkte. Prüft man in Folge die gezogenen Bauteile, indem man zum Beispiel Druckluft einleitet, stellt man fest, dass der erreichbare Berstdruck sehr tief liegt, da die Schweißnahthaftung zu gering ist.

Um diesem Problem entgegenzuwirken, müsste man die Oberflächentemperatur an der beheizten Seite erhöhen was nicht zielführend ist, da das Halbzeug mit steigender Temperatur an Schmelzesteifigkeit verliert und dadurch auf Grund des eigenen Gewichtes umso mehr zum Durchhängen neigt. Die Höhe des Durchhanges (auch "Sag" genannt) wird allerdings durch die Aufbauhöhe der Heizkammer und dem Abstand der beiden Spannrahmen in der Tiefziehmaschine beschränkt: Wird dieser zu groß, hängt das oben befindliche thermoplastische Halbzeug in das unterhalb befindliche thermoplastische Halbzeug, wodurch der Prozess nicht mehr geführt werden kann.

In der Weiterverarbeitung werden die aus dem Twin-Sheet-Thermoformverfahren erzeugten Behälter mittels Fräsen besäumt. Beim Fräsen neigen allerdings Formlinge aus Materialien, welche tiefe mechanische Werte aufweisen, zum Einreißen. Eingerissene Behälter sind Ausschussware und können nicht verwendet werden, da zum Beispiel bei Photobioreaktoren die Nährlösung durch die Risse austritt, bei Dachkuppeln die Dichtheit gegenüber eindringendem Wasser nicht mehr gegeben wäre usw.

Es herrscht daher Bedarf an Verbundkörpern, welche die oben angeführten Mängel in der Verarbeitung und Verwendung nicht zeigen. Vorliegende Erfindung beschäftigt sich daher mit Verbundkörpern (auch Halbzeuge genannt), welche vom Eigenschaftsprofil für die Herstellung im Twin-Sheet-Thermoformverfahren geeignet sind und aus denen transparente Bauteile wie Lichtkuppen, Lichtpaneele, Designkörper, Leichtbaustrukturen, Photobioreaktoren, usw. herstellbar sind.

Die vorliegende Erfindung hat es sich daher zur Aufgabe gestellt, Verbundkörper/Halbzeuge zur prozesssicheren Verarbeitung im Twin-Sheet-Thermoformverfahren und den Folgeprozessen zur Verfügung zu stellen, welche die folgenden Eigenschaften in sich vereinen:

1. Die spektrale Transmission (Y) des Halbzeuges/Verbundkörpers soll hoch sein, bevorzugt ist $Y \geq 70\%$, vorzugsweise $\geq 80\%$ im gesamten Frequenzbereich von 380 bis 780 nm im Plattenstärkenbereich von 1 bis 5 mm, damit die Lichtausbeute bzw. die Menge an Licht, die durch den Verbundkörper tritt, hoch ist.

2. Die UV-Beständigkeit sollte sehr hoch sein, um ein Vergilben und in weiterer Folge auch eine Reduktion der Transmission bei UV-Bestrahlung zu verhindern.

3. Die mechanischen Eigenschaften sollen sehr gut sein, damit bei der Verarbeitung des Verbundkörpers nach dem Twin-Sheet-Thermoformverfahren ein Einreißen der thermogeformten Behälter verhindert wird.

4. Die Verbundkörper sollen miteinander gut verschweißbar sein, ohne dass dabei die Halbzeuge im Thermoformverfahren übermäßig überhitzt werden müssen, sodass eine prozessfähige Fertigung ermöglicht wird.

5. Aus ökologischen Gründen sollen die verwendeten Werkstoffe im Wesentlichen halogenfrei sein.

Die gestellte Aufgabe wird durch einen im Wesentlichen halogenfreien Verbundkörper gelöst, insbesondere zur Verwendung im Twin- Sheet- Thermoformverfahren, aufweisend

(a) eine Substratschicht und
(b) eine auf der Substratschicht angeordnete rückseitige Schicht,

wobei die Substratschicht und die rückseitige Schicht jeweils mindestens einen thermoplastischen Werkstoff umfassen, wobei die Substratschicht und die rückseitige Schicht jeweils zumindest eine Glasübergangstemperatur $T_{mg}$ aufweisen, wobei der Verbundkörper dadurch gekennzeichnet ist, dass die höchste Glasübergangstemperatur $T_{mg}$ der rückseitigen Schicht um mindestens $\delta T_{mg}$ 5°C niedriger ist gegenüber der niedrigsten Glasübergangstemperatur $T_{mg}$ der Substratschicht, wobei der gesamte Verbundkörper bei einer Gesamtstärke von 1 - 5 mm eine spektrale Transmission Y im Wellenlängenbereich von 380 - 780 nm von ≥ 70, bevorzugt ≥ 80%, gemessen nach DIN EN ISO 13468-2 (Ausgabenstand Juli 2006) und eine Bruchdehnung von mindestens 10 % gemessen nach ISO 527-2/1B/50 aufweist.

Aus dem Stand der Technik ist kein Verbundkörper bekannt, bei dem die zuvor genannten Eigenschaften in ausreichendem Maße erfüllt sind.

Beim beschriebenen Verbundkörper handelt es sich bevorzugt um ein Coextrudat oder Laminat, besonders bevorzugt ein Coextrudat.

Optional kann auf der, der rückseitigen Schicht (2) abgewandten Seite der Substratschicht eine Deckschicht (1), umfassend einen vorzugsweise UV-stabilen und/oder UV-stabilisierten thermoplastischen Werkstoff, angeordnet sein.

Bevorzugte Ausgestaltungen und Details der Erfindung werden nachfolgend beschrieben:

Deckschicht (1)

Die optionale Deckschicht (1) umfasst einen thermoplastischen Werkstoff, der sowohl opak als auch transparent sein kann. Bevorzugt ist der thermoplastische Werkstoff UV-stabil oder UV-stabilisiert. Bei Verwendung von opaken Werkstoffen ist die Schichtstärke der Deckschicht (1) so zu wählen, dass sowohl die Vorgaben in Richtung UV-Stabilität als auch an die Transparenz des Gesamtverbundes erfüllt werden. Es gilt die Regel: Je größer die Opazität des jeweiligen Werkstoffes, umso dünner soll die aufgebrachte Schichtstärke sein. Die Opazität ("Trübung") ist ein Maß für die Lichtundurchlässigkeit von Stoffen.

Unter UV- stabilen thermoplastischen Werkstoffen im erfindungsgemäßen Sinn versteht man Polymere, bei welchen sich die optischen und physikalischen Eigenschaften ohne Zusätze auch bei länger anhaltender UV- Bestrahlung im Wesentlichen nicht verändern. Als Beispiele hierfür sind zu nennen PMMA (Polymethylmethacrylat), HI- PMMA (impact modifiziertes Polymethylmethacrylat), ASA (Acrylnitril- Styrol- Acrylester- Terpolymer), PVDF (Polyvinylidenfluorid) und andere. Erfindungsgemäß ist es auch möglich UVstabile Werkstoffe zusätzlich mit UV- Additiven zu versehen.

Unter UV- stabilisierten Werkstoffen im erfindungsgemäßen Sinn versteht man thermoplastische Polymere, welche im Reinzustand eine meist nur mäßige bis schlechte UV- Beständigkeiten zeigen und erst durch Zusatz von UV- Additiven die optischen und physikalischen Eigenschaften bei länger anhaltender UV Bestrahlung im Wesentlichen nicht bzw. in einem für den Anwendungsfall akzeptablen Masse verändern. Als Beispiele hierfür sind zu nennen PC (Polycarbonat), PET (Polyethylentherephthalat), PETG (glykolmodifiziertes Polyethylentherephthalat), SAN (Styrol- Acrylnitril- Copolymer), MABS (Methylmethacrylat- Acrylnitril- Butadien- Styrol), PE (Polyethylen), PP (Polypropylen), PS (Polystyrol), MBS (Methylmethacrylat- Butadien- Styrol) und andere.

Optional können der Deckschicht (1) Farbmittel, insbesondere Farbstoffe, zugesetzt sein.

Im Wesentlichen halogenfrei bedeutet im Rahmen der Erfindung, dass der Gehalt an Halogen bezogen auf den Gesamtverbundkörper 3 Gew. % nicht überschreiten darf. Wenn also z.B. eine PVDF-Deckschicht mit 30 $\mu$m bei einer Gesamtdicke des Verbundkörpers vom 1,5 mm vorhanden ist, beträgt der Halogengehalt rund 1 Gew. %. Dies wäre im Rahmen der Erfindung tolerabel und für den Fachmann noch im Wesentlichen halogenfrei.

Substratschicht (2)

Die Substratschicht (2) - auch Trägerschicht bezeichnet - ist mindestens einlagig, kann aber auch mehrlagig ausgebildet sein. Die Substratschicht (2) stellt bevorzugt den prozentuell größten Anteil an der Gesamtschichtstärke des Verbundkörpers dar und umfasst thermoplastische Polymere, welche eine hohe spektrale Transmission im Wellenlängenbereich zwischen 380 und 780 nm zeigen. Das rheologische Verhalten dieser Polymere ist bevorzugt mit dem der optionalen Deckschicht (1) und der rückseitigen Schicht (3) in der Art und Weise abgestimmt, dass diese im Coextrusionsverfahren miteinander verarbeitet werden können. Weiters sollte bevorzugt in der Materialauswahl darauf geachtet werden, dass eine chemische Verträglichkeit zwischen der optionalen Deckschicht (1) und der Substratschicht (2) einerseits aber auch eine chemische Verträglichkeit zwischen der Substratschicht (2) und der rückseitigen Schicht (3) andererseits besteht, um eine ausreichende Haftung zwischen den einzelnen Schichten zu gewährleisten. Bei unverträglichen Polymeren kann nämlich Delamination auftreten.

Gegebenenfalls kann der Substratschicht (2) Recyclat, Mahlgut oder Regenerat zugesetzt werden, solange die optischen und mechanischen Eigenschaften im Rahmen der vorgegebenen Anforderung liegen.

Optional können der Substratschicht (2) auch Farbmittel, bevorzugt Farbstoffe zugesetzt werden. Die Farbmittel können sich von allfälligen Farbmitteln in der Deckschicht (1) unterscheiden.

Rückseitige Schicht (3)

Um das thermische Verschweißen im Twin-Sheet-Thermoformverfahren zu begünstigen und die Schweißnahtfestigkeit zu erhöhen, ist es von Vorteil, wenn die beiden Verbundkörper/Halbzeuge an den Flächen, die miteinander verschweißt werden, spezielle thermische Materialeigenschaften zeigen. Es hat sich überraschenderweise gezeigt, dass eine Reduktion der Glasübergangstemperatur der rückseitigen Schicht (3) gegenüber der Glasübergangstemperatur der Substratschicht (2) einen sehr positiven Einfluss auf die Verarbeitung im Twin-Sheet Thermoformverfahren des erfindungsgemäßen Mehrschichtverbundes zeigt. Mit der Reduktion der Glasübergangstemperatur in der rückseitigen Schicht (3) wird die Möglichkeit geschaffen, dass einerseits die Temperatur der Substratschicht (2) prozesstechnisch in einen Bereich gelegt werden kann, in dem die Schmelzesteifigkeit ausreicht, um den erhitzten Verbundkörper (4) ohne einen zu hohen Durchhang in der Tiefziehmaschine verarbeiten zu können. Andererseits liegt die Temperatur an der Oberfläche der rückseitigen Schicht (3), welche mit dem Verbundkörper (4) in der gegenüberliegenden Formhälfte verschweißt werden soll, nach der Verformphase und unmittelbar vor der Verschweißphase noch über der Glasübergangstemperatur des thermoplastischen Polymers, welcher für die rückseitige Schicht (3) verwendet wird. Das thermische Verschweißen zeigt nur bei Temperaturen über der Glasübergangstemperatur ausreichende Festigkeiten, da nur über dieser Schwelltemperatur die Polymermoleküle eine ausreichenden Mobilität besitzen, um an den beiden aufeinandergepressten Grenzflächen miteinander zu verschlaufen. Je höher die Differenz der Oberfläche gegenüber der Glasübergangstemperatur, umso mobiler sind die Moleküle und umso mehr neigen sie zu Verschlaufen, wodurch in weiterer Folge die Schweißnahfestigkeit erhöht wird. Nur dadurch kann einerseits ein stabiles Twin-Sheet-Thermoformverfahren und andererseits auch eine stabile hochfeste Schweißnahtfestigkeit gewährleistet werden.

Erfindungsgemäß umfasst die rückseitige Schicht (3) entweder a) bereits (einen) solche thermoplastische (n) Werkstoff (e), dass die rückseitige Schicht (3) gegenüber der Substratschicht (2) eine um mindestens 5°C niedrigere Glasübergangstemperatur $\delta T_{mg}$ zeigt oder b) dem (n) thermoplastischen Werkstoff (en) der rückseitigen Schicht (3), wird wenigstens ein Additiv zur Reduktion der Glasübergangstemperatur zugesetzt ist, wodurch eine Polymerblend entsteht, welches eine gegenüber der Substratschicht (2) um mindestens 5°C niedrigere Glasübergangstemperatur $\delta T_{mg}$ aufweist. Unterschiede von $\delta T_{mg}$ bis 60 °C wurden untersucht.

Falls die Substratschicht (2) mehrlagig ausgebildet ist und zumindest zwei Lagen (2', 2") aufweist, so ist bevorzugt vorgesehen, dass die Glastemperatur(en) $T_{mg}$ der dicksten Lage (2') der Substratschicht (2', 2") heranzuziehen ist (sind) und die höchste Glasübergangstemperatur ($T_{mg}$) der rückseitigen Schicht (3) um mindestens ($\delta T_{mg}$) 5°C niedriger ist gegenüber der niedrigsten Glasübergangstemperatur ($T_{mg}$) der dicksten Lage (2', 2") der Substratschicht (2, 2').

Bevorzugterweise zeigen die thermoplastischen Polymere (gegebenenfalls auch mit Additiv zur Reduktion der Glasübergangstemperatur) auch eine möglichst hohe spektrale Transmission. Bei Verwendung von opaken Werkstoffen oder Polymerblendmischungen, welche auf Grund der Unterschiede im Brechungsindex der Einzelkomponenten eine Opazität aufweisen, ist die Schichtstärke der rückseitigen Schicht (3) so zu wählen, dass die Vorgaben an die spektrale Transmission des mehrschichtigen, coextrudierten thermoplastischen Verbundkörpers erfüllt werden. Es gilt auch hier die Regel: Je größer die Opazität des jeweiligen Werkstoffes, umso dünner muss die Schichtstärke sein, die aufgebracht wird.

Optional können der rückseitigen Schicht (3) auch Farbmittel, insbesondere Farbstoffe, zugesetzt werden. Die Farbmittel können sich von allfälligen Farbmitteln in der Deckschicht (1) und/oder Substratschicht (2) unterscheiden.

**Verwendete Meßverfahren**

Transmission:

Die Transmission ist in der Physik eine Größe für die Durchlässigkeit eines Mediums für Wellen wie zum Beispiel elektromagnetische Wellen (Licht usw.). Trifft eine Welle, die sich im Medium A (z. B. Luft) bewegt, auf ein Medium B endlicher Dicke (z. B. eine Platte), so wird sie je nach den Stoffeigenschaften des Hindernisses zum Teil an den Grenzflächen reflektiert und beim Durchqueren ganz oder teilweise absorbiert. Der verbleibende Rest wird durch das Medium B transmittiert und tritt an der gegenüberliegenden Seite des Mediums B wieder aus. Die Transmission Y gibt dabei das Verhältnis von transmittierter Lichtmenge zu einfallender Lichtmenge an. Erfindungsgemäße Verbundkörper, welche für Verarbeitung im Twin-Sheet-Thermoformverfahren Einsatz finden können, müssen für die geplanten Verwendungsgebiete eine hohe spektrale Transmission für Strahlungen im Frequenzbereich von 380 - 780 nm zeigen. Es hat sich gezeigt, dass mehrschichtige, coextrudierte thermoplastische Verbundkörper mit einer spektralen Transmission von $\geq$ 70, bevorzugt $\geq$ 80%, im verwendeten Stärkenbereich von 1 - 5 mm die Anforderungen erfüllen. Die Messung erfolgt nach der DIN EN ISO 13468-2 (Ausgabenstand Juli 2006). Für die nachfolgenden Beispiele wurden die Probekörper aus dem erfindungsgemäßen mehrschichtigen, coextrudierten thermoplastischen Verbundkörper mittels eines Spektralphotometers (Marke: Ultrascan Pro; Hersteller: Hunterlab; Baujahr: 2005; Seriennummer: USP 1064) vermessen.

Bruchdehnung:

Die Bruchdehnung ist ein Materialkennwert und wird durch die EN ISO 527-1: Kunststoffe- Bestimmung der Zugeigenschaften Teil 1: Allgemeine Grundsätze  (Ausgabestand April 1996) sowie die EN ISO 527-2: Kunststoffe- Bestimmung der Zugeigenschaften - Teil 2: Prüfbedingungen für Form- und Extrusionsmassen (Juli 1996) beschrieben. Sie wird mittels einer Zugprüfmaschine, z.B. Fabrikat der Fa. Roell Zwick (Baujahr: 1999 Type: TM Z020/TH2S; Werk No.: 141429; Einspannlänge: 115 mm) bei einer Zuggeschwindigkeit von 50 mm/min und einem Kraftaufnehmer von 10 kN geprüft. Als Spanneinrichtung werden mechanische Klemmbacken verwendet. Zur Messung der Dehnung des Prüfkörpers wird ein Dehnungsmesser des Typs Makro 066550 der Fa. Roell Zwick eingesetzt. Die Probekörper des Typus 1B werden aus den coextrudierten Halbzeugen mit der Länge der Schulterstäbe parallel zur Extrusionsrichtung hergestellt. Die Dicke der Prüfkörper entspricht dabei der Dicke des Halbzeuges bzw. des Verbundkörpers, aus welchem die Probenkörper präpariert werden.

Glasübergangstemperatur:

Die Glasübergangs- oder Erweichungstemperatur $T_G$ ist jene Temperatur, bei der ein Kunststoff die größte Änderung der Verformungsfähigkeit aufweist. Dieser sogenannte Glasübergang trennt den unterhalb liegenden spröden energieelastischen Bereich (= Glasbereich) vom oberhalb liegenden weichen entropieelastischen Bereich (= gummielastischer Bereich). Die Glasübergangstemperatur $T_G$ wird gemessen mittels eines DSC (DSC = Differential- Scanning-Calorimetry) Messgerätes nach ISO 11357-2:1999; Plastics- Differential Scanning Calorimetry, (Part 2: Determination of glass transition temperature) und ist charakterisiert durch die "midpoint temperature" $T_{mg}$. Als Messgerät wird ein Fabrikat der Fa. Netzsch (Baujahr: 1999; Type: Phönix DSC-204; Fabrikat No.: 6.240.1150) verwendet. Die $T_{mg}$ wird dabei immer in der zweiten Aufheizphase charakterisiert, um die Einflüsse der Verarbeitung und der Probenpräparation zu vermeiden.

Die $T_{mg}$ der jeweiligen Schichten (2) und (3) werden bestimmt, indem eine annähernd gleich große Menge an Probematerial aus dem erfindungsgemäßen mehrschichtigen, coextrudierten thermoplastischen Verbundkörper präpariert wird. Dies geschieht im Fall der Substratschicht (2), indem mittels einer Lochzange kleine runde Scheiben aus dem Halbzeug gestanzt und anschließend durch mechanische Bearbeitung die rückseitige Schicht (3) und gegebenenfalls die Deckschicht (1) entfernt werden. Der $T_{mg}$ wird an dem zurückbleibenden Folienabschnitt bestimmt.

Der $T_{mg}$ der rückseitigen Schicht (3) wird an Probekörpern der rückseitigen Schicht (3) bestimmt. Dazu werden mittels einer Präzisionsfräse die Deckschicht (1) und die Substratschicht (2) des erfindungsgemäßen mehrschichtigen, coextrudierten thermoplastischen Verbundkörper mechanisch abgearbeitet, sodass die rückseitige Schicht (3) als dünne Folie verbleibt. Alternativ gibt es auch die Möglichkeit die rückseitige Schicht (3) mittels eines Gerätes zur Anfertigung von Mikrotomschnitten als dünne Scheiben abzutragen und anschließend die Probekörper aus den dünnen Scheiben anzufertigen.

Aus diesen Folien werden mit Hilfe einer Lochzange Probekörper ausgestanzt und eingewogen, sodass sich annähernd dieselbe Probemenge wie jene zur Messung der Substratschicht (2) ergibt. Anschließend erfolgt die Messung. Der Wert $\delta T_{mg}$ wird mittels folgender Formel berechnet:

$$\delta T_{mg} = T_{mg\,(Substrat)} - T_{mg\,(rückseitige\,Schicht(3))}$$

Werden Polymerblends verwendet, so können je nach Zusammensetzung und Verträglichkeit der Ausgangsmaterialien auch zwei oder mehrere Glasübergangsbereiche beobachtet werden. Zwei verträgliche amorphe Mischungen bilden im Idealfall eine gemeinsame Glasübergangstemperatur aus, welche im Temperaturbereich zwischen den Glasübergängen der Einzelkomponenten liegt. Wesentlich weiter verbreitet sind allerdings unverträgliche Mischungen: Hier finden sich zwei Glasübergangstemperaturen bei annähernd denen der ursprünglichen Einzelkomponenten wieder.

Im erfindungsgemäß einfachsten Fall weist die rückseitige Schicht (3) nur einen $T_{mg}$ und die Substratschicht (2) nur einen $T_{mg}$ auf. In diesem Fall muss der Unterschied der beiden Glasübergangstemperaturen $\delta T_{mg}$ 5 °C oder mehr betragen. Mehrere $T_{mg}$ treten in Blend auf, bei denen die thermoplastischen Werkstoffe nicht oder nur teilverträglich sind. Bei vollständig verträglichen thermoplastischen Werkstoffen tritt wiederum nur ein $T_{mg}$ auf.

Im erfindungsgemäßen Fall wird beim Auftreten von mehr als einer $T_{mg}$ in der rückseitigen Schicht (3), zur Berechnung der $\delta T_{mg}$ gegenüber der Substratschicht (2) der Übergangsbereich mit der höchsten Erweichungstemperatur der rückseitigen Schicht (3) verwendet. Treten in der Substratschicht (2) mehr als eine $T_{mg}$ auf, so wird zur Berechnung der Differenz $\delta T_{mg}$ der Übergangsbereich mit der tiefsten Erweichungstemperatur verwendet.

### Additive und Zusatzstoffe

UV Additive:

Der ultraviolette Anteil des Sonnenlichtes kann in Polymeren chemische Bindungen zerstören. Dies in einem Prozess, den man Photodegradation nennt. Diese chemische Veränderungen im Polymer bewirken auch Änderungen im chemischen und physikalischen Verhalten des Verbundkörpers. Bruch und Farbänderungen sind z. B. Folgen dieser Reaktionen. Um Effekte dieser Art zu unterbinden oder zu verzögern, können UV-Additive zugesetzt werden. In Abhängigkeit von der Wirkungsweise dieser UV-Additive unterscheidet man in UV-Absorber und UV-Stabilisatoren. UV-Absorber führen zu einer Absorption des UV-Anteils des Lichtes, welcher durch das Polymer hindurchtritt und wandeln diesen in Wärmeenergie um. Als Beispiel für sehr wirksame UV-Absorber können Benzophenone genannt werden. UV-Stabilisatoren hemmen freie Radikale, welche durch die Bestrahlung mit UV-Strahlung entstehen und stoppen die weitere Zersetzung. Als Beispiel für sehr wirksame Stabilisatoren können HALS (hindered amine light stabilizers) genannt werden. Im erfindungsgemäßen Fall ist es von Vorteil UV-Additive einzusetzen, welche im Trägermaterial löslich und gut verträglich sind, um eine möglichst hohe spektrale Transmission zu erreichen.

Additive zur Reduktion der Glasübergangstemperatur:

Unter Additiven zur Reduktion der Glasübergangstemperatur versteht man im erfindungsgemäßen Sinne organische Zusatzstoffe, welche dem Trägermaterial hinzugefügt werden und je nach Quantität die Erweichungstemperatur $T_{mg}$ senken. Als Trägermaterial im erfindungsgemäßen Sinn wird jener thermoplastische Werkstoffanteil der Schicht (3) bezeichnet, welcher eine Quantität von größer oder gleich 50 Gew. % umfasst.

Tabelle 1: Messresultate der Erweichungstemperatur $T_{mg}$ an Polymeren und Compounds

| | PETG[2] | GPPS[3] | PC[4] | 95% PC/ 5% PETG | 90% PC/ 10% PETG | 80% PC/ 20% PETG | 70% PC/ 30% GPPS | 50% PC/ 50% GPPS |
|---|---|---|---|---|---|---|---|---|
| $T_{mg}$[1] | 82 | 92 | 153 | 146 | 143 | 140 | 142 | 138 |
| | | | | | | 111 | 95 | 93 |

[1] Glasübergangs- oder Erweichungstemperatur $T_{mg}$ gemessen nach ISO 11357-2:1999; Plastics-Differential Scanning Calorimetry, (Part 2: Determination of glass transition temperature), [ ]=°C.
[2] PETG: Glykolmodifiziertes Polyethylentherephthalat
[3] GPPS: "General purpose polystyrol" (nicht schlägzäh modifiziert)
[4] PC: Polycarbonat

Als bevorzugte Substanzen zur Reduktion der Glasübergangstemperatur werden bevorzugt Additive organischen Ursprungs verwendet werden, deren Brechungsindex möglichst nahe am Brechungsindex des Trägermaterials liegt. Es wurde gefunden, dass mit abnehmendem Unterschied im Brechungsindex zwischen Trägermaterial und Additiv die spektrale Transmission des Compounds steigt.

Der Brechungsindex, auch Brechzahl genannt, ist eine optische Materialeigenschaft. Diese physikalische dimensionslose Größe gibt an, um welchen Faktor die Wellenlänge und die Phasengeschwindigkeit des Lichts in dem getesteten Medium kleiner sind als im Vakuum.

Tabelle 2.: Brechungsindex verschiedener Materialien und optische Eigenschaften der Mischungen

| | PC[3] | PETG[4] | GPPS[5] | 50% PC/ 50% GPPS | 90% PC/ 10% PETG |
|---|---|---|---|---|---|
| n[1] | 1,585 | 1,57 | 1,58 | | |
| Y[2] | 88 | 88 | 90 | 85 | 83 |
| [1] Brechungsindex, [ ] = dimensionslos<br>[2] Y: spektrale Transmission im Wellenlängenbereich von 380-780 nm, gemessen nach DIN EN ISO 13468-2 (Ausgabenstand Juli 2006) an Prüfkörpern bei einer Stärke von 3 mm; [ ]=%<br>[3] PC: Polycarbonat<br>[4] PETG: Glykolmodifiziertes Polyethylentherephthalat<br>[5] GPPS: "General purpose polystyrol" (nicht schlägzäh modifiziert) | | | | | |

Als Additive zur Reduktion der Glasübergangstemperatur für das Trägermaterial PC (Polycarbonat) können beispielsweise PETG (Glykolmodifiziertes Polyethylentherephthalat), GPPS (General purpose oder auch Standard Polystyrol), Polycaprolactam u.a. genannt werden. Bei Verwendung von PMMA als Trägermaterial können beispielsweise PETG (Glykolmodifiziertes Polyethylentherephthalat) oder Polycaprolactam verwendet werden.

Farbmittel:

Farbmittel im erfindungsgemäßen Sinne sind Additive, welche im Trägermaterial der jeweiligen Schicht löslich sind und daher keine oder nur geringe Streuung verursachen, sodass die spektrale Transmission bei deren Zusatz zum Trägermaterial möglichst hoch bleibt. Erfindungsgemäß zählen dazu Farbstoffe, Fluoreszenzfarbstoffe sowie Pigmente, welche in niedrigen Konzentrationsbereichen in dem jeweiligen Trägermaterial löslich sind.

Fluoreszenzfarbstoffe sind die bevorzugt zugesetzten Farbmittel für Bioreaktoren. Fluoreszenzfarbstoffe zeichnen sich dadurch aus, dass sie nach Absorption von Licht höherer Energie (also niedrigerer Wellenlänge) Licht abstrahlen, wobei die Energie für das abgestrahlte Licht tiefer liegt als die des absorbierten Lichtes. Sie sind somit in der Lage, Licht höherer Energie in Licht niedrigerer Energie umzuwandeln, und werden daher auch "Wellenlängenschieber" genannt. Diese sind dem Fachmann an sich bekannt. Aus der Praxis kennt man Wellenlängenschieber als Zusätze zu Waschmitteln in denen UVabsorbierende Farbstoffe blau emittieren: Dies dient zum Überdecken des Vergilbens der Wäsche. Auch die Verwendung in Kunststoffen ist bekannt; so werden Fluoreszenzfarbstoffe in Folien für Gewächshäuser eingesetzt, um die Intensität des einfallenden Lichts in speziellen Frequenzbereichen zu erhöhen und dadurch das Pflanzenwachstum der in den Gewächshäusern befindlichen Pflanzen zu beschleunigen. Es werden dabei durch die Wellenlängenschieber Frequenzen erzeugt, welche die Pflanzen vorzugsweise absorbieren, um damit Photosynthese zu betreiben. Durch die gegenüber dem natürlichen Tageslicht erhöhten Frequenzen ergibt sich ein deutlich erhöhtes Pflanzenwachstum.

Die Farbmittel können in Trägermedien eingearbeitet sein und so im Extrusionsprozess zugesetzt werden oder aber auch direkt dem Werkstoff im Extrusionsprozess zugesetzt werden. Als Trägermedium bezeichnet man dabei den Stoff, in den das Pigment eingearbeitet wird, beispielsweise ein Wachs oder einen Kunststoff.

Es können auch mehrere Farbmittel in Kombination eingesetzt werden, entweder im selben Verbundkörper oder z.B. durch coextrudieren verschieden eingefärbter Schichten. So besteht die Möglichkeit in den drei unterschiedlichen Schichten des mehrschichtigen, coextrudierten thermoplastischen Verbundkörper in den jeweiligen Schichten unterschiedliche Farbmittel zu verwenden. Es besteht aber auch die Möglichkeit die Substratschicht (2) je nach Erfordernissen zu teilen - also mehrlagig auszubilden - und jede dieser Schichten mit unterschiedlichen Farbmitteln einzufärben. Beispiele für organische Fluoreszenzstoffe, die als Wellenlängenschieber in den erfindungsgemäßen Aufbauten verwendet werden können, sind Naphtalsäureimide und Perylenderivate.

Herstellungsverfahren

Erfindungsgemäße Verbundkörper werden bevorzugt im Coextrusionsverfahren hergestellt. Dieses ist dadurch gekennzeichnet, dass es artgleiche oder fremdartige Kunststoffschmelzen vor dem Verlassen einer Austrittsdüse zusammenführt. Für den erfindungsgemäßen Aufbau werden die Schmelzen der Schichten (1), (2) und (3) über einen Adapter oder in einer Mehrkanaldüse oder einer Kombination von beidem zusammengeführt und durch die Düse ausgestoßen, über einen Glättkalander geleitet und gekühlt. Die Kühlung erfolgt in der Regel dadurch, dass die Halbzeuge über eine Kühlbahn geleitet werden nach der sie in der Breite zugeschnitten werden. Der Längsbeschnitt erfolgt vor dem Abstapeln.

Verarbeitung der mehrschichtigen, coextrudierten thermoplastischen Verbundkörper

Erfindungsgemäße Verbundkörper werden im Twin-sheet-Thermoformverfahren (auch "2-Platten-Formen" genannt) verarbeitet. Es handelt sich dabei um eine Weiterentwicklung des Thermoformens und stellt ein wirtschaftliches und ressourcenschonendes Verfahren zur Herstellung von präzisen, steifen Hohlkörpern fast beliebiger Geometrie dar. Während beim Thermoformen ein Verbundkörper erhitzt und anschließend umgeformt wird, geschieht das im Twin-Sheet-Thermoformverfahren mit zwei Platten (Formhälften) entweder nacheinander (amerikanische Twin-Sheet Version) oder gleichzeitig (europäische Twin-Sheet Version oder simultanes Twin-Sheet). Dabei entstehen zumeist Hohlkörper, die entweder tankähnliche (mittels zweier Negativ-Werkzeuge) oder auch panel-/gehäuseähnliche Produkte bereit stellen, bei denen eine Formhälfte negativ, die zweite Formhälfte positiv, also in Richtung der ersten Formhälfte geformt wird.

Anwendungsbeispiele

Die Erfindung wird nachstehend anhand von Beispielen erläutert. Dazu wurden die u. a. thermoplastischen Werkstoffe im Coextrusionsverfahren mit einer Breite von 1500 mm gefertigt.

Beispiel 1:

Aufbau:

| Schicht | Schichtdicke [$\mu$m] | Zusammensetzung der Schicht |
|---|---|---|
| Substratschicht (2) | 2370 | 100 Gew. % PC |
| Rückseitige Schicht (3) | 140 | 90 Gew. % PC, 10 Gew. % PETG |

Beispiel 2:

Aufbau:

| Schicht | Schichtdicke [$\mu$m] | Zusammensetzung der Schicht |
|---|---|---|
| Deckschicht (1) | 100 | 100 Gew. % HI-PMMA |
| Substratschicht (2) | 2260 | 100 Gew. % PC |
| Rückseitige Schicht (3) | 140 | 90 Gew. % PC, 10 Gew. % PETG |

Angabe zu den verwendeten Rohstoffen:

Tabelle 3.: Charakteristische Messwerte der verwendeten Rohstoffe

| | MFR[1] | Bruchdehnung | Y[3] |
|---|---|---|---|
| PC[4] | 6,1[8] | 155 | 88 |
| PETG[5] | 17[9] | 420 | 85 |

(fortgesetzt)

| | MFR[1] | Bruchdehnung | Y[3] |
|---|---|---|---|
| HI- PMMA[6] | 2,9[7] | 30 | 90 |

[1] MFR gemessen gemäß ISO 1133: 2005 06 01; "Determination of the melt- mass- flow rate (MFR) and the melt volume- flow rate (MVR) of thermoplastics"; [ ]= g/ 10 min;

[2] Bruchdehnung nach DIN EN ISO 527-1: Kunststoffe- Bestimmung der Zugeigenschaften Teil 1: Allgemeine Grundsätze (Ausgabenstand April 1996) sowie die DIN EN ISO 527-2: Kunststoffe-Bestimmung der Zugeigenschaften - Teil 2: Prüfbedingungen für Form- und Extrusionsmassen (Ausgabenstand Juli 1996), [ ]= %, Messung bei Raumtemperatur

[3] Y: spektrale Transmission im Wellenlängenbereich von 380 - 780 nm, gemessen nach DIN EN ISO 13468-2 an Prüfkörpern bei einer Stärke von 3 mm. [ ]= %

[4] PC: Polycarbonat

[5] PETG: Glykolmodifiziertes Polyethylentherephthalat

[6] HI- PMMA: hoch schlagzähmodifiziertes Polymethylmethacrylat

[7] MFR analog [1]; Messbedingungen: Temperatur bei 230°C, Belastung bei 3,8 kg

[8] MFR analog [1]; Messbedingungen: Temperatur bei 300°C, Belastung bei 1,2 kg

[9] MFR analog [1]; Messbedingungen: Temperatur bei 220°C, Belastung bei 10 kg

Die angegebenen Beispiele wurden wie folgt charakterisiert:

Tabelle 4.: Charakteristische Messwerte der erfindungsgemäßen im wesentlichen halogenfreien mehrschichtigen, coextrudierten thermoplastischen Verbundkörper.

| | **Beispiel 1** | **Beispiel 2** |
|---|---|---|
| $\delta T_{mg}$ [1] | 7 | 11 |
| Bruchdehnung[2] | 217 | 54 |
| Spektrale Transmission Y[3] | 86,2 | 82,1 |
| Dicke [4] | 1,5 | 2,2 |

[1] $\delta T_{mg}$; Differenz in der $T_{mg}$ der Substratschicht (2) und Schicht(3), $T_{mg}$ gemessen nach ISO 11357-2:1999; Plastics- Differential Scanning Calorimetry, (Part 2: Determination of glass transition temperature); [ ]= °C;

[2] Bruchdehnung nach EN ISO 527-1: Kunststoffe- Bestimmung der Zugeigenschaften Teil 1: Allgemeine Grundsätze sowie der EN ISO 527-2: Kunststoffe- Bestimmung der Zugeigenschaften - Teil 2: Prüfbedingungen für Form- und Extrusionsmassen, [ ]= %, Messung bei Raumtemperatur

[3] Y: spektrale Transmission im Wellenlängenbereich von 380 - 780 nm, gemessen nach DIN EN ISO 13468-2 an Prüfkörpern der jeweiligen Beispiele. [ ]= %

[4] Dicke: Gesamtdicke des erfindungsgemäßen im Wesentlichen halogenfreien mehrschichtigen, coextrudierten thermoplastischen Verbundkörper, gemessen mittels Mikrometerschraube, [ ]= mm

In Folge wurden die coextrudierten Halbzeuge mit Hilfe des Twin- Sheet- Thermoformverfahrens zu Verbundkörpern verarbeitet, welche auf die Verschweißhaftung überprüft wurden. Dies wurde durch Einleiten von Druckluft in den hohlen Verbundkörper bewerkstelligt, wobei der Druck beobachtet wird, bei welchem die Schweißstellen abreißen. An den erfindungsgemäßen Beispielen kann beim vorgegebenen Berstdruck von ca. 5 bar kein Ablösen der Schweißstellen voneinander beobachtet werden. An PC- (Polycarbonat) und PVC- (Polyvinylchlorid) Platten in derselben Stärke, allerdings ohne dem erfindungsgemäßem Aufbau, reißen die Schweißstellen schon bei deutlich tieferen Berstdrücken.

Aus dem zuvor Gesagten ergeben sich zahlreiche Anwendungsmöglichkeiten für die genannten Verbundkörper. Folglich betrifft die Erfindung weiters: Körper, umfassend wenigstens zwei Verbundkörper, wobei die Verbundkörper abschnittsweise im Bereich der jeweiligen rückseitigen Schicht miteinander verbunden sind; Behälter, umfassend einen Hohlraum, der von einem Körper der vorgenannten Art gebildet wird; einen Bioreaktor, umfassend einen Behälter; die Verwendung eines Verbundkörpers zur Herstellung einer Lichtkuppe, eines Lichtpaneels, eines Designkörpers und/oder eines architektonischen Körpers. Dabei handelt es sich lediglich um eine beispielhafte Aufzählung, wobei die Erfindung dabei nicht auf diese Verwendungen beschränkt ist.

Die Erfindung ist nochmals verdeutlicht in den schematisierten Figuren.

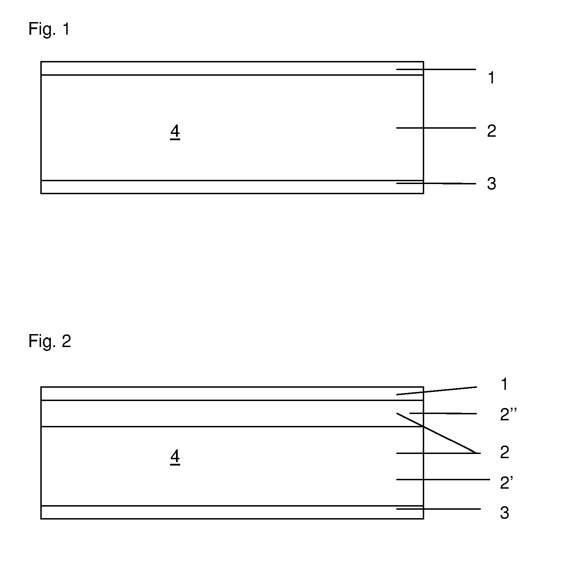

Fig. 1 und 2 zeigen jeweils ein Ausführungsbeispiel der Erfindung.

In Fig. 1 ist der Verbundkörper 4, aufweisend eine einlagige Substratschicht 2 und eine darauf angeordnete rückseitige Schicht 3 erkennbar. In Fig. 2 ist die Substratschicht 2 im Unterschied zum Beispiel der Fig. 1 zweilagig mit den Lagen 2', 2"ausgebildet.

**Patentansprüche**

1. Im Wesentlichen halogenfreier Verbundkörper (4), insbesondere zur Verwendung im Twin- Sheet- Thermoformverfahren, aufweisend

   (a) eine mindestens einlagige Substratschicht (2) und
   (b) eine auf der Substratschicht (2) angeordnete rückseitige Schicht (3),
   wobei die Substratschicht (2) und die rückseitige Schicht (3) jeweils mindestens einen thermoplastischen Werkstoff umfassen, wobei die Substratschicht (2) und die rückseitige Schicht (3) jeweils zumindest einer Glasübergangstemperatur $T_{mg}$ aufweisen, **dadurch gekennzeichnet, dass** die höchste Glasübergangstemperatur ($T_{mg}$) der rückseitigen Schicht (3) um mindestens ($\delta T_{mg}$) 5°C niedriger ist gegenüber der niedrigsten Glasübergangstemperatur ($T_{mg}$) der Substratschicht (2, 2'), wobei der gesamte Verbundkörper (4) bei einer Gesamtstärke von 1 - 5 mm eine spektrale Transmission (Y) im Wellenlängenbereich von 380 - 780 nm von $\geq$ 70, bevorzugt $\geq$ 80%, gemessen nach DIN EN ISO 13468-2 (Ausgabenstand Juli 2006) und eine Bruchdehnung von mindestens 10 % gemessen nach ISO 527-2/1B/50 aufweist.

2. Verbundkörper nach Anspruch 1, **dadurch gekennzeichnet, dass** dem thermoplastischen Werkstoff der rückseitigen Schicht (3) ein Additiv zur Reduktion der Glasübergangstemperatur $T_{mg}$ zugesetzt ist.

3. Verbundkörper nach Anspruch 1 oder Anspruch 2, **dadurch gekennzeichnet, dass** der wenigstens eine thermoplastische Werkstoff der Substratschicht (2) UV-Additive und/oder Farbmittel enthält.

4. Verbundkörper nach einem der Ansprüche 1 bis 3, **dadurch gekennzeichnet, dass** auf der Substratschicht (2) eine Deckschicht (1), umfassend einen thermoplastischen Werkstoff, angeordnet ist.

5. Verbundkörper nach Anspruch 4, **dadurch gekennzeichnet, dass** die Deckschicht (1) im Wesentlichen UV-stabil, UV-stabilisiert oder UV-stabil und UV-stabilisiert ist.

6. Verbundkörper nach Anspruch 4 oder Anspruch 5, **dadurch gekennzeichnet, dass** die Deckschicht (1) Farbmittel enthält.

7. Verbundkörper nach einem der Ansprüche 1 bis 6, **dadurch gekennzeichnet, dass** die rückseitige Schicht (3) Farbmittel enthält.

8. Verbundkörper nach einem der Ansprüche 1 bis 7, **dadurch gekennzeichnet, dass** der Verbundkörper Fluoreszenzfarbstoffe aufweist.

9. Verbundkörper nach einem der Ansprüche 1 bis 8, **dadurch gekennzeichnet, dass** die Substratschicht (2) Recyclat, Mahlgut und/oder Regenerat aufweist.

10. Verbundkörper nach einem der Ansprüche 1 bis 9, **dadurch gekennzeichnet, dass** zumindest zwei der Schichten (1, 2, 3) Farbmittel enthalten, welche bevorzugt verschieden sind.

11. Verbundkörper nach einem der Ansprüche 1 bis 10, **dadurch gekennzeichnet, dass** die Substratschicht (2) zumindest zwei Lagen (2', 2") aufweist.

12. Verfahren zum Verbinden eines thermoplastischen Verbundkörpers (4) nach einem der Ansprüche 1 bis 11 mit einem weiteren thermoplastischen Verbundkörper (4) nach einem der Ansprüche 1 bis 11, wobei beide Verbundkörper (4) in eine Tiefziehmaschine eingelegt, anschließend erwärmt und daraufhin thermogeformt werden, wobei die beiden Verbundkörper (4) abschnittsweise im Bereich der jeweiligen rückseitigen Schicht (3) mittels Druck und Temperatur, vorzugsweise mittels Twin-Sheet-Thermoformverfahren miteinander verbunden werden.

13. Körper, umfassend wenigstens zwei Verbundkörper nach einem der Ansprüche 1 bis 11, wobei die Verbundkörper (4) abschnittsweise im Bereich der jeweiligen rückseitigen Schicht (3) miteinander verbunden sind.

**14.** Behälter, umfassend einen Hohlraum, der von einem Körper nach Anspruch 13 gebildet wird.

**15.** Verwendung eines Verbundkörpers nach einem der Ansprüche 1 bis 11 zur Herstellung einer Lichtkuppe, eines Lichtpaneels, eines Designkörpers und/oder eines architektonischen Körpers.

Fig. 1

Fig. 2

Europäisches
Patentamt

European
Patent Office

Office européen
des brevets

# EUROPÄISCHER RECHERCHENBERICHT

**Nummer der Anmeldung**

EP 12 16 3850

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/108594 A1 (MITSUBISHI CHEM CORP [JP]; YOKOGI MASASHI; KITADE TAKU; KAWANO MASAHIK) 9. September 2011 (2011-09-09) * Absätze [0007], [0133], [0145]; Ansprüche 1,6,7,10; Tabelle 1 * ----- | 1-11,15 | INV. B29C51/00 B29C51/14 B32B27/08 |
| A | "pages 98-101; 502-503" In: Saechtling: "Kunststoff Tachenbuch", 2001, carl hanser verlag, XP002682368, * Seite 503; Tabelle 4.33 * ----- | 1 | |
| A | US 2012/028001 A1 (FARNSWORTH HILARY [US] ET AL) 2. Februar 2012 (2012-02-02) * Absätze [0027], [0030]; Abbildungen 4a-4c * ----- | 1-15 | |

| RECHERCHIERTE SACHGEBIETE (IPC) |
|---|
| B29C B32B |

Der vorliegende Recherchenbericht wurde für alle Patentansprüche erstellt

| Recherchenort | Abschlußdatum der Recherche | Prüfer |
|---|---|---|
| München | 27. August 2012 | Attalla, Giancarlo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 12 16 3850

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2012

| Im Recherchenbericht angeführtes Patentdokument | Datum der Veröffentlichung | Mitglied(er) der Patentfamilie | | Datum der Veröffentlichung |
|---|---|---|---|---|
| WO 2011108594    A1 | 09-09-2011 | JP<br>WO | 2011201304 A<br>2011108594 A1 | 13-10-2011<br>09-09-2011 |
| US 2012028001    A1 | 02-02-2012 | CA<br>US | 2747271 A1<br>2012028001 A1 | 28-01-2012<br>02-02-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1326959 B1

- EP 1169428 B1